# EUROPEAN PATENT APPLICATION

(11) **EP 3 279 284 A1**
(43) Date of publication of application: **07.02.2018**
(21) Application number: 16772927.6
(22) Date of filing: 30.03.2016
(51) Int. Cl.: C09K 3/00

(54) **HEAT-EXPANDABLE MICROSPHERES**

(30) Priority: 30.03.2015 JP 2015069915
(71) Applicant: Kureha Corporation, Chuo-ku Tokyo 103-8552 (JP)
(72) Inventor: EJIRI, Tetsuo, Tokyo 103-8552 (JP); HASEGAWA, Tomohisa, Tokyo 103-8552 (JP); MATSUZAKI, Mitsuhiro, Tokyo 103-8552 (JP); SUZUKI, Yasuhiro, Tokyo 103-8552 (JP); NOMURA, Shintaro, Tokyo 103-8552 (JP)
(74) Representative: Zimmermann & Partner Patentanwälte mbB
(86) International application number: PCT/JP2016/060307
(87) International publication number: WO 2016/159046

(57) **Abstract**

Provided are heat-expandable microspheres in which the water content can be adjusted easily and quickly by efficiently dehydrating the water present in the heat-expandable microspheres.

Resolution Means

Heat-expandable microspheres having a structure in which a foaming agent is encapsulated inside an outer shell formed from a polymer, the average value of the degrees of circularity, calculated based on a parameter indicating a particle diameter of each particle of the heat-expandable microspheres and a parameter indicating the circumference, being 0.985 or less are provided.

## Description

### TECHNICAL FIELD

The present invention relates to heat-expandable microspheres and a wet cake containing the heat-expandable microspheres.

### BACKGROUND ART

A heat-expandable microsphere is obtained by microcapsulating a volatile foaming agent with a polymer and is also called a heat-expandable microcapsule or a heat-expandable microsphere. In general, the heat-expandable microspheres can be produced by a method in which a polymerizable monomer mixture containing at least one type of polymerizable monomer and a volatile foaming agent is suspension-polymerized in an aqueous dispersion medium. As the polymerization reaction progresses, an outer shell (shell) is formed by the polymer that is produced, and heat-expandable microspheres having a structure in which the foaming agent is encapsulated in the outer shell are obtained.

For example, Patent Document 1 proposes heat-expandable microspheres in which an outer shell encapsulates a foaming agent and formed from a copolymer having a polymethacrylimide structure and, especially, heat-expandable microspheres in which monomers forming the polymethacrylimide structure by copolymerization reaction are methacrylonitrile and methacrylic acid; and a production method thereof.

### CITATION LIST

### Patent Literature

Patent Document 1: WO 2007/072769

### SUMMARY OF INVENTION

### Technical Problem

However, in the case where heat-expandable microspheres produced by using the production method of heat-expandable microspheres described in Patent Document 1 are handled as a wet cake, transport efficiency during transportation may become low or work load of drying to remove water may be large because the amount of solid that can be transported decreases if the water content is large due to the water coexisting with the heat-expandable microspheres, when substances having the same weight and volume are transported. Furthermore, although, conventionally, there are not many cases where the adjustment of water content present in a wet cake containing heat-expandable microspheres is focused and researched, the number of cases of troubles due to water content present in a wet cake containing heat-expandable microspheres is unexpectedly large.

The present invention was completed in the light of circumstances described above, and the main object of the present invention is to provide heat-expandable microspheres in which the water content present in a wet cake containing heat-expandable microspheres can be adjusted easily and quickly by efficiently dehydrating the water present in a slurry containing the heat-expandable microspheres; and a wet cake in which water content has been adjusted.

### Solution to Problem

When the present inventors focused on the degree of circularity of heat-expandable microspheres, the present inventors found that the water content present in a wet cake containing heat-expandable microspheres can be adjusted easily and quickly as a result of efficient dehydration treatment of the water present in a slurry containing the heat-expandable microspheres when the degree of circularity is within a particular range, and thus completed the present invention.

That is, the heat-expandable microspheres according to the present invention are heat-expandable microspheres having a structure in which a foaming agent is encapsulated inside an outer shell formed from a polymer, the average value of the degrees of circularity, representing the degree of similarity between the shape of each particle of the heat-expandable microspheres and a circle, being 0.985 or less.
Furthermore, in the heat-expandable microspheres according to the present invention, the average value of the degrees of circularity is preferably 0.980 or less.
Furthermore, in the heat-expandable microspheres according to the present invention, the degree of similarity is preferably a parameter obtained by comparing a value of circumference based on a diameter calculated from a projected area of the particle obtained by a picture image that is obtained by taking an image of the particle by an imaging means, and a value of circumference of the particle calculated from the picture image.
Furthermore, in the heat-expandable microspheres according to the present invention, the average value of the diameter calculated from the projected area of the particle is preferably from 15 to 200 µm.
Furthermore, in the heat-expandable microspheres according to the present invention, the average value of the diameter calculated from the projected area of the particle is preferably from 40 to 200 µm.
Note that the wet cake according to the present invention contains the heat-expandable microspheres of the present invention, and the solid content of the heat-expandable microspheres of the present invention is from 70 mass% to 90 mass%.

That is, to achieve the above object of the present invention, the average value of the degrees of circularity of the particles of the heat-expandable microspheres of the present invention is 0.985 or less, and the average particle diameter may be of any value. Furthermore, the heat-expandable microspheres of the present invention preferably has an average value of the degrees of circularity of the particles of 0.985 or less and an average particle diameter of 15 to 200 µm, the average value of the degrees of circularity of 0.985 or less and the average particle diameter of 40 to 200 µm, the average value of the degrees of circularity of 0.980 or less and the average particle diameter of any value, the average value of the degrees of circularity of 0.980 or less and the average particle diameter of 15 to 200 µm, or the average value of the degrees of circularity of 0.980 or less and the average particle diameter of 40 to 200 µm.

### Advantageous Effects of Invention

According to the present invention, heat-expandable microspheres in which the water content present in a heat-expandable microsphere wet cake can be adjusted easily and quickly by efficiently dehydrating the water present in a slurry containing the heat-expandable microspheres; and a wet cake are provided.

### Description of Embodiments

Embodiments for carrying out the present invention will now be explained. Moreover, the embodiment explained below illustrates a single representative example of the embodiments of the present invention, and it should not be interpreted that the scope of the present invention is limited to the embodiments.

### Heat-expandable microspheres

The heat-expandable microspheres according to an embodiment of the present invention has a structure in which a foaming agent is encapsulated inside an outer shell formed from a polymer, and the average value of the degrees of circularity of the particles of the heat-expandable microspheres is 0.985 or less. Furthermore, the average value of the degrees of circularity is more preferably 0.980 or less. The degree of circularity will be described in detail below, and the explanation thereof is omitted here. By setting the average value of the degrees of circularity to satisfy the value described above (0.985 or less), the size of gap between particles of the heat-expandable microspheres increases, thereby enhancing dewaterability.

Furthermore, when the average value of the degrees of circularity is 0.980 or less, the size of gap between particles of the heat-expandable microspheres increases even more, thereby further enhancing dewaterability. By this, a microsphere wet cake having a high solid content can be obtained efficiently (in a short time period). That is, when the average value of the degrees of circularity is 0.985 or less, the water content present in the wet cake containing the heat-expandable microspheres can be adjusted easily and quickly by efficiently dehydrating the water present in a slurry containing the heat-expandable microspheres. Furthermore, when the average value of the degrees of circularity is 0.980 or less which is preferable, the water content present in the wet cake containing the heat-expandable microspheres can be adjusted more easily and quickly by more efficiently dehydrating the water present in a slurry containing the heat-expandable microspheres. When the average value of the degrees of circularity is greater than 0.985, since the filling rate of the particles is enhanced and gap between particles becomes narrower, work load of dehydration is increased, thereby deteriorating the efficiency of dehydration. Therefore, adjustment of the water content present in the wet cake containing the heat-expandable microspheres becomes difficult.

The average particle diameter of the heat-expandable microspheres according to an embodiment of the present invention is preferably from 15 to 200 µm, more preferably from 40 to 200 µm, and even more preferably from 50 to 150 µm. Although efficient dehydration treatment can be performed with any value of the average particle diameter of the heat-expandable microspheres according to an embodiment of the present invention, when the value of the average particle diameter of the heat-expandable microspheres according to the embodiment of the present invention is within the preferable range described above (15 to 200 µm), gap between particles increases, thereby making dehydration treatment easier. Furthermore, when the value of the average particle diameter is within the more preferable range (40 to 200 µm) or the even more preferable range (15 to 150 µm) described above, gap between particles increases even more, thereby making dehydration treatment even easier.

### Degree of circularity

The degree of circularity in the present invention is a parameter indicating the degree of similarity between the actually measured shape of the particle of the heat-expandable microspheres according to an embodiment of the present invention and a circle. That is, the degree of circularity is a parameter representing how close the shape of the particle of the heat-expandable microspheres is to a circle. The degree of circularity is used as a method to express the shape of the heat-expandable microspheres quantitatively, and is an indicator to represent the level of surface irregularities of the heat-expandable microspheres quantitatively. The degree of circularity is 1 when the shape of the particle of the heat-expandable microsphere has the shape (congruent) identical to the circle, and the value thereof becomes smaller as the similarity between the shape and the circle decreases, i.e., as the surface shape of the heat-expandable microspheres becomes more complex (shape having a higher frequency of recesses and protrusions and a larger difference in height of the recesses and protrusions).

### Calculation method of degree of circularity

The degree of circularity is calculated using a circularity calculation device. The circularity calculation device has an imaging part, an image analysis processing part, and a circularity calculating part. Each component will be described below. Note that the circularity calculation device also has a memory component to appropriately store the image data obtained by the imaging part and the data calculated by the image analysis processing part and by the circularity calculating part.

### Imaging part

The imaging part is an imaging component to take a picture of heat-expandable microspheres. More specifically, the imaging part obtains the picture image of an object as a still image by irradiating a cell through which the heat-expandable microspheres, which is the object, are passed with strobe light in an interval of 1/60 seconds (the time period of flashing of the strobe light at this time is approximately 2 µ seconds). The imaging part is not particularly limited as long as the imaging part is a component that can take a picture of the heat-expandable microspheres. Examples thereof include electron microscopes having a CCD camera and an imaging function. Note that the number of particles taken by the imaging part is preferably approximately 10000. The imaging part may be incorporated in a device that has the image analysis processing part and the circularity calculating part described below (e.g. computer) or may be an independent device.

### Image analysis processing part

The image analysis processing part is a part which calculates the data indicating the particle diameter of a particle when the particle of the taken heat-expandable microspheres is supposed to be a circle (hereinafter, "particle diameter D") and the data indicating the circumference (hereinafter, "circumference C"), based on the picture image obtained by the imaging part. The image analysis processing part obtains the data showing the projected area of the heat-expandable microspheres in the picture image (hereinafter, "area S") and calculates the particle diameter D based on the data. More specifically, the image analysis processing part calculates each area S of the heat-expandable microsphere in the picture image, and calculates the particle diameter D by substituting the value of the calculated area S in the equation (D = 2 × (S/π)^{1/2}). Note that the image analysis processing part calculates a value of the particle diameter D with a calculated frequency value of 50% as the average particle diameter D50, besides the particle diameter D. The average particle diameter D50 is calculated from each frequency value obtained by using a scale obtained by subjecting the particle diameter D of each of 10000 particles calculated from the picture image to logarithmic transformation as the x-axis, and then dividing the range of 0.5 to 200 µm into 1024 sections. The image analysis processing part calculates values of the particle diameter D with which a frequency value becomes 50%, as the average particle diameter D50. Note that, in the present specification and the like, the value of the average particle diameter D50 is used as the average particle diameter of the heat-expandable microspheres.

### Circularity calculating part

The circularity calculating part is a part which calculates the degree of circularity based on the particle diameter D and the circumference C calculated in the image analysis processing part. First, the circularity calculating part calculates the data showing individual degree of circularity of taken image of each particle (hereinafter, "individual degree of circularity ϕ"'). The individual degree of circularity ϕ' is a value comparing the value of circumference determined from the particle diameter D (the value of the circumference of a particle when the particle is supposed to be a circle) and the actually measured circumference C. That is, if the actual particle is a circle, the value of circumference of the presumed value and the circumference C becomes the same value. The circularity calculating part calculates the individual degree of circularity ϕ' by substituting the particle diameter D and the circumference C to the equation (ϕ' = D_{π}/C). The circularity calculating part calculates the individual degree of circularity ϕ' of each particle taken by the imaging part.

Thereafter, the circularity calculating part calculates the data showing the average value of the degrees of circularity in the heat-expandable microspheres (hereinafter, "degree of circularity ϕ") based on the calculated individual degree of circularity ϕ'. The circularity calculating part obtains the data showing each frequency of the calculated individual degree of circularity ϕ' as the frequency value. The circularity calculating part then calculates the degree of circularity ϕ based on the individual degree of circularity ϕ showing a value within the range set by a user and each frequency value of the individual degree of circularity ϕ' set by a user. That is, the degree of circularity ϕ is a value obtained by multiplying each of the values within the range set by the user and each of the corresponding frequency value thereof, summing up the obtained values to obtain the total, and then dividing this total by the total of the frequency values of the values within the range set by the user. Note that the circularity calculating part may have a threshold set by the user when the frequency value is obtained.

### Polymer

The heat-expandable microspheres according to an embodiment of the present invention have a structure in which a foaming agent is encapsulated inside an outer shell formed from a polymer.

The polymer forming the outer shell is designed to achieve the effect of the present invention. That is, the polymer is designed so that the water content can be adjusted easily and quickly by efficiently dehydrating the water present in the slurry of the heat-expandable microspheres. Furthermore, the heat-expandable microspheres according to an embodiment of the present invention may be designed to exhibit excellent gas barrier properties, heat resistance, and solvent resistance. The polymer for forming the outer shell is a polymer obtained by polymerizing a polymerizable monomer and a crosslinkable monomer.

### Polymerizable monomer

For the heat-expandable microspheres according to an embodiment of the present invention, at least one type of polymerizable monomer is used as described above. That is, at least one type of polymerizable monomer is used to form a polymer constituting the outer shell. As the polymerizable monomer, one type of polymerizable monomer may be used or a plurality of types (two or more types) of polymerizable monomers (a substance containing two or more types of polymerizable monomers is also referred to as "polymerizable monomer mixture") may be used.

As the polymerizable monomer, use of at least a nitrile compound is preferred. One type of nitrile compound may be used, or a plurality of types of nitrile compounds may be used. Specific examples of the nitrile compound include acrylonitrile and methacrylonitrile. Note that, in the present specification and the like, acrylonitrile and methacrylonitrile may be referred collectively as "(meth)acrylonitrile". As the nitrile compound, at least acrylonitrile is used. That is, when a plurality of types of nitrile compounds are used, another nitrile compound (e.g. methacrylonitrile) is used in addition to acrylonitrile. When a plurality of types of nitrile compounds are used, the acrylonitrile is contained in an amount of preferably 70 mass% or greater, and more preferably 75 mass% or greater, per 100 mass% total of the nitrile compounds. As the polymerizable monomer, besides the nitrile compound, for example, acrylic esters, such as vinylidene chloride, methyl acrylate, ethyl acrylate, butyl acrylate, and dicyclopentenyl acrylate; methacrylic esters, such as methyl methacrylate, ethyl methacrylate, butyl methacrylate, and isobornyl methacrylate; acrylic acids, methacrylic acids, vinyl chloride, styrene, vinyl acetate, α-methylstyrene, chloroprene, neoprene, and butadiene can be used. Among these, use of vinylidene chloride, acrylic esters, methacrylic esters, vinyl monomers, such as styrene and vinyl acetate, as the polymerizable monomer is preferred. In this case, when the total amount of the polymerizable monomer mixture is 100 mass%, the proportion of the nitrile compound is preferably from 70 mass% to 99.5 mass%. That is, the polymerizable monomer except the nitrile compound is contained in an amount of greater than 0.5 mass% but less than 30 mass% in the polymerizable monomer mixture. Within this range, heat-expandable microspheres having excellent processability, foamability, gas barrier properties, and the like can be produced.

### Crosslinkable monomer

In the heat-expandable microspheres according to an embodiment of the present invention, a crosslinkable monomer is used to form a polymer constituting the outer shell. One type of crosslinkable monomer may be used, or a plurality of types (two or more types) of crosslinkable monomers may be used. As the crosslinkable monomer, a polyfunctional compound having at least two polymerizable carbon-carbon double bonds (-C=C-) is used. Examples of the polymerizable carbon-carbon double bonds include vinyl groups, methacryl groups, acryl groups, and allyl groups. At least two polymerizable carbon-carbon double bonds may be the same or different from each other. Note that, when the heat-expandable microsphere is heated to a temperature equal to or higher than the foaming initiation temperature, the microsphere itself expands to form the foamed particle (individual foam). The expansion ratio is a value calculated by dividing the volume of the foamed particle by the volume of an unexpanded heat-expandable microsphere.

The crosslinkable monomer is preferably a bifunctional crosslinkable monomer having two polymerizable carbon-carbon double bonds. Examples of the crosslinkable monomer include aromatic divinyl compounds, such as divinylbenzene, divinylnaphthalene, and derivatives thereof; diethylenically unsaturated carboxylic esters, such as ethylene glycol diacrylate, diethylene glycol diacrylate, ethylene glycol dimethacrylate, and diethylene glycol dimethacrylate; acrylates or methacrylates derived from alcohols having aliphatic groups at both terminals, such as 1,4-butanediol and 1,9-nonanediol; and divinyl compounds, such as N,N-divinylaniline and divinyl ether. The crosslinkable monomer is preferably used in an amount from 0.01 to 5 parts by mass per 100 parts by mass of the polymerizable monomer.

### Foaming agent

The heat-expandable microspheres according to an embodiment of the present invention contains a foaming agent encapsulated inside an outer shell formed from a polymer. The foaming agent is a substance that becomes a gas at a temperature that is equal to or lower than the softening point of the polymer constituting the outer shell. As the foaming agent, hydrocarbon having a boiling point corresponding to the foaming initiation temperature or the like can be used. Examples of the foaming agent include isobutane, n-butane, n-pentane, isopentane, n-hexane, isooctane, isododecane, petroleum ethers, and mixtures of two or more types thereof. The foaming agent is used in an amount from 10 to 40 parts by mass, preferably 12 to 35 parts by mass, and more preferably 15 to 32 parts by mass, per 100 parts by mass of the polymerizable monomer. Note that, when the heat-expandable microspheres are heated, the foaming agent vaporizes and expansion force is applied to the outer shell and, at the same time, the elastic modulus of the polymer constituting the outer shell decreases rapidly, thereby causing rapid expansion at a certain temperature. This temperature at which the rapid expansion occurs is referred to as the foaming initiation temperature.

### Method of producing heat-expandable microspheres

The heat-expandable microspheres of the present invention can be produced by a method in which the polymerizable monomer, the crosslinkable monomer, and the foaming agent are suspension-polymerized in an aqueous dispersion medium containing a dispersion stabilizer. The method of producing the heat-expandable microspheres by suspension polymerization will be described in detail below. A mixture containing the polymerizable monomer, the crosslinkable monomer, and the foaming agent (hereinafter, also referred to as "polymerizable mixture") is dispersed in the aqueous dispersion medium to form oily droplets of the polymerizable mixture. The formation of the droplets of the polymerizable mixture is also called granulation. After the droplet formation, the polymerization of the polymerizable monomers is performed using a polymerization initiator. By such suspension polymerization, heat-expandable microspheres having a structure in which a foaming agent is encapsulated in an outer shell formed from the produced polymer can be obtained.

The amount of water in the aqueous dispersion medium (the amount that is mixed as water in the initial stage of preparation of the aqueous dispersion medium) is preferably from 100 to 500 parts by mass per 100 parts by mass of the polymerizable monomer.

As the polymerization initiator, one that is generally used in this technical field may be used, but an oil-soluble polymerization initiator that is soluble in the polymerizable monomer is preferred. As the polymerization initiator, an azo compound such as 2,2'-azobisisobutyronitrile is preferred.

Although the polymerization initiator is typically contained in the polymerizable mixture, when early polymerization needs to be suppressed, a part or all of the polymerization initiator may be added to an aqueous dispersion medium during the droplet formation step or after the droplet formation step of the polymerizable monomer mixture to transfer the polymerization initiator into the droplets of polymerizable monomer mixture.

The used proportion of the polymerization initiator is typically from 0.0001 to 3 parts by mass, preferably from 0.001 to 2.5 parts by mass, more preferably from 0.01 to 2.0 parts by mass, even more preferably from 0.1 to 1.5 parts by mass, and most preferably from 0.5 to 1.3 parts by mass, per 100 parts by mass of at least one type of polymerizable monomer.

The suspension polymerization is typically performed in an aqueous dispersion medium containing a dispersion stabilizer. Examples of the dispersion stabilizer include inorganic microparticles of silica or the like. For example, as a co-stabilizer, condensation products of diethanolamine and aliphatic dicarboxylic acid, polyvinylpyrrolidone, polyethylene oxide, and various emulsifiers can be used.

The order of adding the components to the aqueous dispersion medium is optional. However, water and the dispersion stabilizer, and optionally the co-stabilizer, polymerization aid, and the like are generally added to prepare an aqueous dispersion medium containing the dispersion stabilizer. The foaming agent, the polymerizable monomer, and the crosslinkable monomer are typically mixed in advance and then added to an aqueous dispersion medium. The foaming agent, the polymerizable monomer, and the crosslinkable monomer may be added separately to the aqueous dispersion medium to combine them in the aqueous dispersion medium, thereby forming a polymerizable mixture (oily mixture). The polymerization initiator may be used after being added to the polymerizable monomer in advance. When early polymerization needs to be avoided, for example, the polymerizable mixture may be added to the aqueous dispersion medium, and the polymerization initiator may be then added with stirring to combine them in the aqueous dispersion medium. The mixing of the polymerizable mixture with the aqueous dispersion medium may be conducted in a separate container to stir and mix the resultant mixture in a stirring machine or dispersing machine having high shearing force, and the mixture may be then charged into a polymerization vessel (hereinafter, also referred to as "reaction vessel").

By stirring and mixing the polymerizable mixture and the aqueous dispersion medium, droplets of the polymerizable mixture is formed in the aqueous dispersion medium. The average diameter of droplets is preferably substantially identical with the average particle diameter of the target heat-expandable microspheres (average particle diameter will be described below). That is, the average diameter of droplets is preferably from 40 to 200 µm. To obtain the heat-expandable microspheres having extremely sharp particle diameter distribution, it is preferable to employ a method, in which the aqueous dispersion medium and the polymerizable mixture are fed into a continuous high-speed rotation and high-shearing type stirring and dispersing machine, both components are continuously stirred and dispersed by the stirring and dispersing machine, the resultant dispersion is poured into a reaction vessel, and suspension polymerization is conducted in the polymerization vessel.

The suspension polymerization is typically performed by degassing the reaction vessel or purging the reaction vessel with an inert gas and by increasing the temperature to 30 to 100°C. In the suspension polymerization, the polymerization temperature may be controlled to a constant temperature or may be increased step-wise. After the suspension polymerization, the reaction mixture containing the produced heat-expandable microspheres is treated by a method, such as filtration, centrifugal separation, or precipitation, to separate the heat-expandable microspheres from the reaction mixture. After the separated heat-expandable microspheres are washed and filtered, the heat-expandable microspheres are collected as a wet cake. As necessary, the heat-expandable microspheres are dried at a temperature that does not initiate foaming.

The heat-expandable microspheres obtained as described above may be subjected to surface treatment using various compounds. Furthermore, adhering inorganic microparticles on the surfaces of the heat-expandable microspheres can prevent aggregation of the particles. Furthermore, the surfaces of the heat-expandable microspheres can be coated with various raw materials.

### Wet cake

The wet cake according to an embodiment of the present invention contains the heat-expandable microspheres according to an embodiment of the present invention. The solid content of the heat-expandable microspheres in the wet cake is from 70 mass% to 90 mass%, preferably from 75 mass% to 85 mass%, and more preferably from 78 mass% to 83 mass%, per 100 mass% total of the wet cake. By setting the solid content to 70 mass% to 90 mass%, deterioration in transport efficiency when the wet cake containing the heat-expandable microspheres is transported is prevented, and work load of drying to remove water from the wet cake becomes small. Furthermore, by setting the solid content to the preferable range (75 mass% to 89 mass%) and a more preferable range (78 mass% to 89 mass%), deterioration in transport efficiency when the wet cake containing the heat-expandable microspheres is transported is further prevented, and work load of drying to remove water from the wet cake becomes even smaller. From the perspectives of transport efficiency during transportation and work load of drying, a higher solid content is preferred; however, to increase the solid content, dehydration treatment time becomes longer, thereby reducing the productivity.

Therefore, when the balance between the productivity and the solid content is investigated, the range of the solid content in the wet cake according to an embodiment of the present invention is from 70 mass% to 90 mass%, preferably from 75 mass% to 89 mass%, and more preferably from 78 mass% to 89 mass%.

By the production method of the wet cake according to an embodiment of the present invention, a wet cake can be obtained by, after the suspension polymerization, treating the reaction mixture containing the produced heat-expandable microspheres by a method, such as filtration, centrifugal separation, or precipitation, to separate the heat-expandable microspheres from the reaction mixture, and then washing and filtering the separated heat-expandable microspheres.

### Applications

The heat-expandable microspheres according to an embodiment of the present invention can be used as foaming agents or mixed with polymer materials to form compositions. For example, the heat-expandable microspheres can be blended into polymer materials, coating materials, inks and the like and heated and foamed to provide articles containing foamed particles (e.g. foam molded articles, foam coated films, foamed inks, and fibrous substances). The heat-expandable microspheres according to the present embodiment can be melt-kneaded together with thermoplastic resins as they are kept unfoamed to form pellets. The heat-expandable microspheres are used in fillers for coating materials for automobiles and the like, foaming agents (heat-expandable foaming agents) for wallpapers and foaming inks (for applying relief patterns to T-shirts and the like), shrink preventing agents, and the like.

Embodiments of the present invention may have the following features.
[1] Heat-expandable microspheres having a structure in which a foaming agent is encapsulated inside an outer shell formed from a polymer, an average value of the degrees of circularity, calculated based on a parameter indicating a particle diameter of each particle of the heat-expandable microspheres and a parameter indicating a circumference, being 0.985 or less.
[2] The heat-expandable microspheres according to [1], where the average value of the degrees of circularity is 0.980 or less.
[3] The heat-expandable microspheres according to [1] or [2], where the parameter indicating the particle diameter is a parameter calculated from a parameter indicating an area of the particle obtained based on a picture image obtained by taking an image of the particle by an imaging means.
[4] The heat-expandable microspheres according to any one of [1] to [3], where the parameter indicating the circumference is a parameter calculated from a parameter indicating an area of the particle obtained based on a picture image obtained by taking an image of the particle by an imaging means.
[5] The heat-expandable microspheres according to any one of [1] to [4], where an average particle diameter of the particles of the heat-expandable microspheres is from 15 to 200 µm.
[6] The heat-expandable microspheres according to any one of [1] to [4], where an average particle diameter of the particles of the heat-expandable microspheres is from 40 to 200 µm.
[7] A wet cake including the heat-expandable microspheres described in any one of [1] to [6], a solid content of the heat-expandable microspheres being from 70 mass% to 90 mass%.

### Examples

The effect of the heat-expandable microspheres according to the present invention will be described below using examples and comparative examples. Note that the scope of the present invention is not limited to such examples.

### Measurement method

### (1) Degree of circularity ϕ and average particle diameter D50 of heat-expandable microspheres

A slurry of the heat-expandable microspheres was sieved using a sieving net #100 (sieve opening: 150 µm). In a 20 mL of pure ion-exchanged water, 0.5 g of sieved slurry was dispersed by applying ultrasonic wave for 15 minutes or longer, and this was used as a sample. The degree of circularity ϕ and the average particle diameter D50 were measured using FPIA-3000, manufactured by Sysmex Corporation. In the measurement condition, the total count was 10000 (number of photographed particles was 10000). Furthermore, the threshold of the individual degree of circularity ϕ' when the frequency value to calculate the degree of circularity ϕ was obtained was 0.2 µm, and the degree of circularity ϕ was calculated in the range where individual degree of circularity ϕ' was from 0.9 to 1.0. The individual degrees of circularity ϕ' of less than 0.9 were excluded because such values might be the cases where a plurality of particles were counted due to aggregation or the like of the particles.

### (2) Method of measuring solid content of heat-expandable microspheres

The sample of the wet cake containing the heat-expandable microspheres was weighed on a balance (displaying four decimal places), and this was used as "Bg". Thereafter, the aluminum cup for placing the sample of the wet cake was weighed as the cup was empty, by a balance (displaying four decimal places), and this was used as "Ag". The sample of the wet cake was placed in the aluminum cup, and this sample was dried in a hot air dryer at 85 (°C) for 1.5 hours. After the drying, this sample was placed in a desiccator and cooled to room temperature (left for 10 minutes). Thereafter, the sample (the aluminum cup having undergone the drying treatment and the sample of the heat-expandable microspheres having undergone the drying treatment) was weighed by a balance (displaying four decimal places), and this was used as "Cg". The solid content of the heat-expandable microspheres was calculated using an equation: [(C - A)/B] × 100.

### Example 1

### (1) Preparation of aqueous dispersion medium

An aqueous dispersion medium was prepared by mixing 15 g of 20 mass% colloidal silica, 0.7 g of 50 mass% diethanolamine-adipic acid condensation product (acid value: 78 mg KOH/g), 0.06 g of sodium nitrite, 89 g of sodium chloride, and 288 g of water. Hydrochloric acid was added to this aqueous dispersion medium to adjust the pH to 3.5.

### (2) Preparation of polymerizable mixture

A polymerizable mixture was prepared by mixing 70 g of acrylonitrile (AN), 28 g of methacrylonitrile (MAN), 2 g of methyl methacrylate (MMA), 1.1 g of diethylene glycol dimethacrylate (2G), 18 g of isododecane isomer mixture (ID mixture), 12 g of isooctane isomer mixture (IO mixture), and 1.0 g of 2,2'-azobisisobutyronitrile (V-60).

### (3) Suspension polymerization

The prepared aqueous dispersion medium and polymerizable mixture were stirred and mixed using a homogenizer to form minute droplets of the polymerizable mixture in the aqueous dispersion medium. The aqueous dispersion medium containing minute droplets of this polymerizable mixture was charged into a polymerization vessel (1.5 L) equipped with an agitator and reaction was performed by heating at 60°C for 14 hours and then heating at 70°C for 10 hours using a hot water bath. After the polymerization, the slurry containing the produced heat-expandable microspheres was filtered, washed with water, and then dried to obtain heat-expandable microspheres.

### (4) Production of wet cake

In a centrifugal dehydrator with the centrifugal effect of 615 G, a heat-expandable microsphere-containing slurry was charged and subjected to centrifugal dehydration. Water in an amount of 1.5 to 2 times the amount of the heat-expandable microspheres was then added for washing, and centrifugal dehydration was performed for another 10 minutes. Thereafter, the wet cake was taken out from the centrifugal dehydrator.

### (5) Measurement of degree of circularity ϕ, average particle diameter D50, and solid content

Using the heat-expandable microspheres obtained in Example 1, the degree of circularity ϕ and the average particle diameter D50 were calculated. The degree of circularity ϕ was 0.962, the average particle diameter D50 was 53 µm, and the solid content was 81%.

### Example 2

Heat-expandable microspheres were obtained in the same manner as the method for Example 1 except for using 71 g of acrylonitrile, 27 g of methacrylonitrile, and 2 g of methyl methacrylate. The degree of circularity ϕ was 0.963, the average particle diameter D50 was 51 µm, and the solid content was 81%.

### Example 3

Heat-expandable microspheres were obtained in the same manner as the method for Example 1 except for using 72 g of acrylonitrile, 26 g of methacrylonitrile, and 2 g of methyl methacrylate. The degree of circularity ϕ was 0.961, the average particle diameter D50 was 55 µm, and the solid content was 82%.

### Example 4

Heat-expandable microspheres were obtained in the same manner as the method for Example 1 except for using 75 g of acrylonitrile, 23 g of methacrylonitrile, and 2 g of methyl methacrylate. The degree of circularity ϕ was 0.961, the average particle diameter D50 was 57 µm, and the solid content was 82%.

### Example 5

Heat-expandable microspheres were obtained in the same manner as the method for Example 1 except for using, as preparation of an aqueous dispersion medium, 30 g of 20 mass% colloidal silica, 1.4 g of 50 mass% diethanolamine-adipic acid condensation product (acid value = 78 mg KOH/g), 0.06 g of sodium nitrite, 89 g of sodium chloride, and 275 g of water, and using, as preparation of a polymerizable mixture, 70 g of acrylonitrile (AN), 28 g of methacrylonitrile (MAN), 2 g of methyl methacrylate (MMA), 0.5 parts by weight of ethylene glycol dimethacrylate (1G), 13 g of isopentane, and 7 g of hexane. The degree of circularity ϕ was 0.983, the average particle diameter D50 was 20 µm, and the solid content was 77%.

### Comparative Example 1

Heat-expandable microspheres were obtained in the same manner as the method for Example 1 except for using 32.5 g of 20 mass% colloidal silica, 1.52 g of 50 mass% diethanolamine-adipic acid condensation product (acid value = 78 mg KOH/g), 0.48 g of sodium nitrite, 80 g of sodium chloride, and 250 g of water as preparation of an aqueous dispersion medium, using 55 g of methacrylonitrile (MAN), 43 g of methacrylic acid (MAA), 2 g of methyl acrylate (MA), 0 g (not used) of diethylene glycol dimethacrylate (2G), 15 g of isopropanol, 15 g of isooctane, 1.0 g of 2,2'-azobisisobutyronitrile (V-60) as preparation of a polymerizable monomer mixture, and reaction was performed by heating at 60°C for 15 hours and further heating at 70°C for 10 hours as polymerization conditions using a hot water bath. In this case, the degree of circularity ϕ was 0.989, the average particle diameter D50 was 20 µm, and the solid content was 58%.

The results for heat-expandable microspheres obtained in Examples 1 to 5 and Comparative Example 1 were collectively shown in Table 1.

**Table 1-I**

| | Example 1 | Example 2 | Example 3 | Example 4 |
|---|---|---|---|---|
| Composition of polymerizable monomer (g) | AN/MAN/MMA | AN/MAN/MMA | AN/MAN/MMA | AN/MAN/MMA |
| | 70/28/2 | 71/27/2 | 72/26/2 | 75/23/2 |
| Crosslinkable monomer (g) | 2G | 2G | 2G | 2G |
| | 1.1 | 1.1 | 1.1 | 1.1 |
| Foaming agent (g) | IO mixture/ID mixture | IO mixture/ID mixture | IO mixture/ID mixture | IO mixture/ID mixture |
| | 12/18 | 12/18 | 12/18 | 12/18 |
| Initiator (g) | V-60 | V-60 | V-60 | V-60 |
| | 1.2 | 1.2 | 1.2 | 1.2 |
| Water (g) | 288 | 288 | 288 | 288 |
| Sodium chloride (g) | 89 | 89 | 89 | 89 |

| Colloidal silica (g) | 20% Colloidal silica 15 | 20% Colloidal silica 15 | 20% Colloidal silica 15 | 20% Colloidal silica 15 |
|---|---|---|---|---|
| 50 mass% Condensation product (g) | Diethanolamine-adipic acid | Diethanolamine-adipic acid | Diethanolamine-adipic acid | Diethanolamine-adipic acid |
| | 0.7 | 0.7 | 0.7 | 0.7 |
| Na nitrite (g) | 0.06 | 0.06 | 0.06 | 0.06 |
| Hydrochloric acid | pH 3.3 | pH 3.3 | pH 3.3 | pH 3.3 |
| Centrifugal dehydration conditions | 615 G × 10 min | 615 G × 10 min | 615 G × 10 min | 615 G × 10 min |
| Solid content (%) | 81 | 81 | 82 | 82 |
| Average particle diameter (D50) (µm) | 53 | 51 | 55 | 57 |
| Degree of circularity | 0.962 | 0.963 | 0.961 | 0.961 |

**Table 1-II**

| | Example 5 | Comparative Example 1 |
|---|---|---|
| Composition of polymerizable monomer (g) | AN/MAN/MMA | MAN/MAA/MA |
| | 70/28/2 | 55/43/2 |
| Crosslinkable monomer (g) | 1G | - |
| | 0.5 | - |
| Foaming agent (g) | IP/Hex | IP/IO mixture |
| | 13/7 | 15/15 |
| Initiator (g) | V-60 | V-60 |
| | 0.6 | 1 |
| Water (g) | 275 | 250 |
| Sodium chloride (g) | 89 | 80 |
| Colloidal silica (g) | 20% Colloidal silica | 20% Colloidal silica |
| | 30 | 32.5 |
| 50 mass% Condensation product (g) | Diethanolamine-adipic acid | Diethanolamine-adipic acid |
| | 1.4 | 1.52 |
| Na nitrite (g) | 0.06 | 0.48 |
| Hydrochloric acid | pH 3.3 | pH 3.3 |
| Centrifugal dehydration conditions | 615 G × 10 min | 615 G × 10 min |
| Solid content (%) | 77 | 58 |
| Average particle diameter (D50) (µm) | 20 | 20 |
| Degree of circularity | 0.983 | 0.989 |

### Observations

In general, the dehydration characteristics are thought to become better as the degree of circularity of the heat-expandable microspheres becomes higher (as it is closer to a perfect circle). However, the dehydration characteristics actually becomes better when the heat-expandable microspheres have low degree of circularity (having a large number of protrusions and recesses) such as the heat-expandable microspheres obtained in Examples 1 to 5 compared to the heat-expandable microspheres having a high degree of circularity such as the heat-expandable microspheres obtained in Comparative Example 1 because the gap between the particles of the heat-expandable microspheres becomes larger. Therefore, water content in the slurry containing the heat-expandable microspheres can be efficiently dehydration-treated in a short time period, and a wet cake having a high solid content can be obtained.

### Industrial Applicability

The heat-expandable microspheres in which the water content can be adjusted easily and quickly by efficiently dehydrating the water present in a slurry containing the heat-expandable microspheres, and the wet cake are provided, which are highly industrially applicable.

## Claims

1. Heat-expandable microspheres having a structure in which a foaming agent is encapsulated inside an outer shell formed from a polymer, an average value of the degrees of circularity, calculated based on a parameter indicating a particle diameter of each particle of the heat-expandable microspheres and a parameter indicating a circumference, being 0.985 or less.

2. The heat-expandable microspheres according to claim 1, wherein the average value of the degrees of circularity is 0.980 or less.

3. The heat-expandable microspheres according to claim 1 or 2, wherein the parameter indicating the particle diameter is a parameter calculated from a parameter indicating an area of the particle obtained based on a picture image obtained by taking an image of the particle by an imaging means.

4. The heat-expandable microspheres according to any one of claims 1 to 3, wherein the parameter indicating the circumference is a parameter calculated from a parameter indicating the area of the particle obtained based on the picture image obtained by taking an image of the particle by the imaging means.

5. The heat-expandable microspheres according to any one of claims 1 to 4, wherein an average particle diameter of the particles of the heat-expandable microspheres is from 15 to 200 µm.

6. The heat-expandable microspheres according to any one of claims 1 to 4, wherein the average particle diameter of the particles of the heat-expandable microspheres is from 40 to 200 µm.

7. A wet cake comprising the heat-expandable microspheres described in any one of claims 1 to 6, a solid content of the heat-expandable microspheres being from 70 mass% to 90 mass%.
